Europäisches Patentamt

European Patent Office

Office européen des brevets

(19)

(11) Publication number: **0 221 565**
**B1**

# EUROPEAN PATENT SPECIFICATION

(45) Date of publication of the patent specification:
**11.07.90**

(51) Int. Cl.⁵: **B01D 33/15**

(21) Application number: **86115447.4**

(22) Date of filing: **07.11.86**

(54) **An apparatus for separation of solid from liquid.**

(30) Priority: **07.11.85 JP 170456/85**

(43) Date of publication of application:
**13.05.87 Bulletin 87/20**

(45) Publication of the grant of the patent:
**11.07.90 Bulletin 90/28**

(84) Designated Contracting States:
**BE CH DE ES FR GB IT LI**

(56) References cited:
**FR-A- 602 884**
**GB-A- 1 002 819**

**IBM TECHNICAL DISCLOSURE BULLETIN, vol. 18, no. 1,
June 1975, page 74, New York, US; C.G: CUNNINGHAM:
"Filter for removing debris from an oil bath"**

(73) Proprietor: **Inaba, Mitsuru, No. 628, Jomyoji,
Kamakura-shi Kanagawa-ken(JP)**

(72) Inventor: **Inaba, Mitsuru, No. 628, Jomyoji, Kamakura-shi
Kanagawa-ken(JP)**

(74) Representative: **Berendt, Thomas, Dr.rer.nat.
Dipl.-Chem. et al, Patentanwälte Dr.rer.nat. Dipl.-Chem.
Th. Berendt Dr.Ing. Hans Leyh Innere Wiener
Strasse 20/III, D-8000 München 80(DE)**

## Description

This invention relates to an apparatus for filtering solids from a solid-containing liquid through a screen and transporting the separated solids.

Heretofore, various apparatus for removing relatively large machined chips have been proposed and utilized for treating these chips produced by machine tools. However, these apparatus cannot remove fine chips, which in turn are collected together with a machining fluid in a coolant tank and precipitated therein. Thus, if a large amount of the fine chips precipitates in the coolant tank, a capacity of the tank is insufficient for the coolant, which overflows from the tank. As a result, a fire accident may occur due to oily property of the coolant. Further, circulation of the unremoved chips together with the coolant may block an ejecting nozzle for the coolant, thereby to cause damage of the tools and worse quality of machined works. Furthermore, a setting disorder may arise in a machining center upon replacement of automatic tools, thereby to adversely affect a machining accuracy.

In view of the foregoing, an apparatus of such a type has been proposed that a conventional coolant tank is provided at its inner bottom with a screw conveyor for removing the precipitated chips therefrom. In such type of apparatus, however, the conveyor was generally arranged horizontally in consideration of its conveying capacity and was impossible to be arranged obliquely for the purpose of reducing a setting area.

Since most of the machined chips are generally magnetic in nature, an apparatus provided at its bottom with a magnetic plate has also been proposed to aggregate the magnetic chips at the bottom within the tank, from which they are scraped and removed by a scraper. Such apparatus, however, necessitates also enlargement of a setting area for the magnetic plate in order to increase the aggregation, thereby to require a large size of the scraper. Thus, the apparatus has a further disadvantage in that only very limited amount of non-magnetic chips may be removed.

For solving the foregoing problems, there has been proposed an apparatus for filtering the chips from chip-containing liquid, such as a coolant, by use of a filtering means, such as a screen, and transporting the chips on a screw conveyor, as disclosed in U.S.-A 3 585 924. However, the apparatus of such type often becomes impossible to filter the chips due to adhesion and clogging of the chips to the screw conveyor for cleaning the filtering means, resulting in a time-consuming, troublesome and inefficient operation.

It has been known from FR-A 602 884, GB-A 1 002 819 and IBM Technical Disclosure Vol. 18, No. 1, (June 1975) to provide nozzles directed at that portion of a rotable screen that emerges from a liquid to be filtered, thereby to wash particles from the screen during the time the washed portion of the screen is above the surface of the liquid. However, this arrangement of the nozzle leads to reattachment of part of the particles to the screen when they are washed off the screen by rotation within the liquid.

Accordingly there is a need to provide an apparatus for treating chips which establishes efficient recovery and removal of the chips at low equipment cost.

It has been found that this aim is reached by a rather simple construction of a separator for separating machined chips from a coolant in which a large quantity of the liquid containing chips may be treated. Further advantages of the apparatus are compactness thus requiring less volume and less space of its replacement, efficient filtration, convenient maintenance and reduced cost of equipment.

The separator of the invention for filtering machined chips from a coolant, which comprises a receiving vessel for chip-containing coolant, a vessel for filtered coolant disposed next to the receiving vessel, a disc screen through which said vessels communicate with each other, a rotary shaft for rotating said disc screen, drive means for rotating said rotary shaft thereby to rotate the disc screen and a nozzle for ejecting a fluid against the disc screen is characterized in that a nozzle is submerged in the filtrate vessel for ejecting a fluid against the disc screen and another nozzle for ejecting a fluid against the disc screen is provided within the receiving vessel above the liquid level.

So according to the invention the particles are really separated twice from the screen: the first time as is usual in the art, by means of nozzles that sprays against the emerged portion of the screen, and the second time by means of a submerged nozzel directed against a submerged portion of the screen to back-wash the same so that the particles can fall further without reattaching to the screen.

Although IBM Technical Disclosure Vol. 18, No. 1 shows an oily sump where oil flows through a rotary filter screen and the debris are removed from the screen by a scraper. Cleaning nozzles are provided to facilitate the work of the scraper blade.

However, the nozzle is not submerged and the principle of the action is different from that of the invention.

The invention will be described herein below in more detail for better understanding with reference to preferred embodiments of the accompanying drawings.

Figure 1 is a schematic side sectional view of the solid/liquid separator which does not show the nozzle arrangement of the invention;

Figure 2 is a sectional view taken along the line II–II in Fig. 1; and

Figure 3 is a sectional side view showing the arrangement of the nozzles according to the invention.

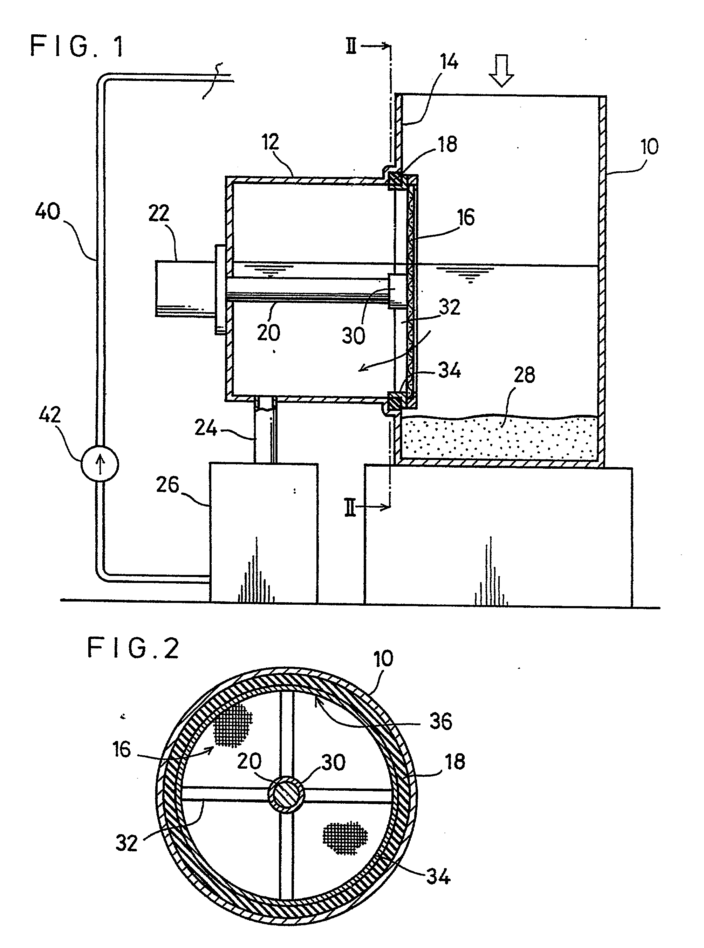

Figures 1 and 2 illustrate the apparatus for solid/liquid separation. Reference 10 represents a receiving vessel for receiving a solid-containing liquid, while reference 12 represents a filtrate vessel arranged adjacent to one side wall 14 of the receiving vessel 10. The side wall 14 is provided with a disc screen 16 by means of a peripheral sealing material 18, through which screen the receiving vessel 10 and the filtrate vessel 12 are communicated with each other. The disc screen 16 at its center is connected to one end of a rotary shaft 20, one end of which in turn is rotatably connected to a driving source 22, such as an electric motor. From the filtrate vessel 12 is extended a pipe 24 which is communicated with a storage tank 26 for collecting a filtrate. The separated solids 28 may be deposited from the solid-containing liquid onto a bottom of the receiving vessel 10.

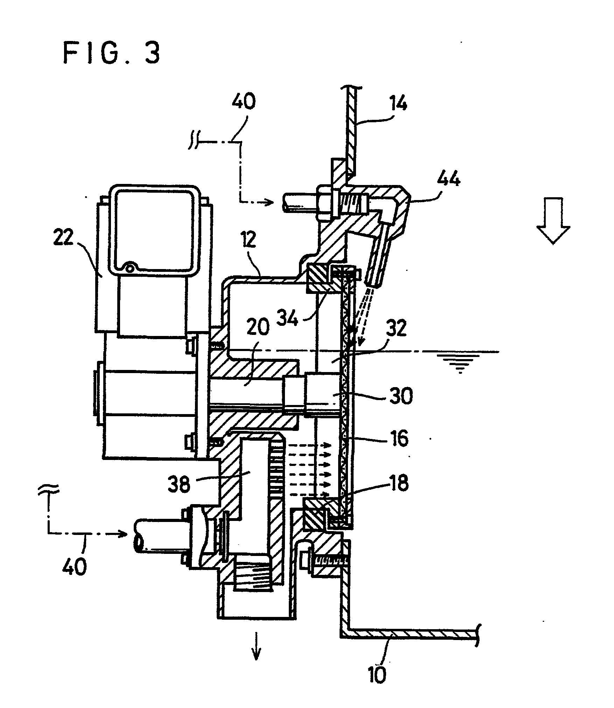

Especially in accordance with the invention, the disc screen 16 may be made not only of a wedge wire or mesh screen in the range of 60 to 200 mesh size but also of a punched plate with or without a nylon® or teflon® net. In order to mount the disc screen 16 rotatably to the rotary shaft 20, as shown in Fig. 2, there is provided with a supporting element 36 comprising a boss 30 mounted to a front end of the rotary shaft 20, a plurality of arms 32 protruded radially outward from the boss 30, and a ring element 34 attached peripherally to the arm 32, while the screen material is extended over the supporting element 36. The storage tank 26 and ejecting nozzles 38 and 44 (see Fig. 3) may be connected by means of a pipe 40, as shown in Fig. 1, which pipe at its portion is provided with a pump 42 for utilizing the filtrate as the washing liquid.

Preferably, the disc screen has an outer diameter of 100 to 500 mm, the mesh size of 60 to 200, the rotation rate of 1 to 50 r.p.m., the washing fluid pressure of about $9.8 \times 10^4$ to $29.4 \times 10^4$ Pa (1 to 3 kg/cm²) and the ejecting flow rate of 20 to 50 l/min may be usually effective for the back-washing.

Further, the back-washing by the washing fluid against the disc screen 16 may be carried out either continuously or batchwise.

Figure 3 illustrates the arrangement of the nozzles of the apparatus according to the invention, wherein the same references are used for the same elements of the previous figures for omitting the detailed description therefore.

According to this figure, the ejecting nozzle 38 for the washing fluid is dipped in the filtrate, while the receiving vessel 10 at its upper portion is provided with another nozzle 44 for a surface washing fluid so as to be directed against the surface of the screen 16 with a certain degree of inclination (an acute angle). As the driving source 22 connected to the rotary shaft 20 for rotating the disc screen 16, there may be employed a direct connection of the rotary shaft 20 with a driving shaft of the electric motor, a gear connection system or a transmission system utilizing an endless chain or belt connected with a remote electric motor.

In operation of the solid/liquid separator according to this description, the electric motor is driven to rotate the disc screen 16 for filtering the solid-containing coolant introduced into the receiving vessel 10. The screen 16 may filter the solids 28 and pass the filtrate therethrough. The ejecting nozzle 38 dipped in the filtrate may eject the washing liquid for back-washing the deposited solids on the screen 16 and subsequently the other nozzle 44 may eject the washing fluid against the surface of the disc screen 16, thereby to ensure removal of the solids remining unseparated after the back-washing.

As apparent from the description herein-above, in accordance with the invention the solid/liquid separation may be achieved by the rotating disc screen, and the disc screen may be back-washed continuously or intermittently by the washing fluid, thereby to prevent clogging due to adhesion of the solids, to maintain the effective solid/liquid separation and to enhance the treating capacity considerably.

Further, the separated solids may be automatically collected and removed by an optional conveyor system.

Thus, the apparatus according to the invention may be constructed in a compact type, requires less space for placement, and is convenient in maintenance of the disc screen with its separating function, thereby to significantly reduce the production and maintenance cost of the apparatus. In particular, the solid/liquid separator according to the invention may be conveniently and readily attached to the conventional existing solid/liquid separating tank. Further, any number of such apparatus may be arranged for selectively setting or improving the treating capacity of the solid-containing liquid.

## Claims

A separator for filtering machined chips from a coolant, which comprises a receiving vessel (10) for chip-containing coolant, a vessel (12) for filtered coolant disposed next to the receiving vessel, a disc screen (16) through which said vessels communicate with each other, a rotary shaft (20) for rotating said disc screen (16), drive means (22) for rotating said rotary shaft thereby to rotate the disc screen (16) and a nozzle (38) for ejecting a fluid against the disc screen (16) characterized in that the ejecting nozzle (38) is submerged in the filtrate vessel (12) and another nozzle (44) for ejecting a fluid against the disc screen (16) is provided within the receiving vessel above the liquid level.

## Patentansprüche

Trennvorrichtung zum Abfiltrieren von Spänen aus der Metallbearbeitung aus einem Kühlmittel, bestehend aus einem Aufnahmebehälter (1) für das die Späne enthaltende Kühlmittel, einem Behälter (12) für das filtrierte Kühlmittel neben dem Aufnahmebehälter, einem scheibenförmigen Sieb (16) über welches die beiden Behälter miteinander verbunden sind, einer drehbaren Welle (20) zur Drehung des scheibenförmigen Siebs (16), einer Antriebsvorrichtung (22) zum Drehen des scheibenförmigen Siebs (16) und einer Düse (38) für das Ausstoßen einer Flüssigkeit gegen das scheibenförmige Sieb (16), dadurch gekennzeichnet, daß die Ausstoßdüse (38) im Behälter (12) für das Filtrat eingetaucht ist, und daß eine andere Düse (44) für das Ausstoßen einer Flüssigkeit gegen das scheibenförmige Sieb (16) innerhalb des Aufnahmebehälters oberhalb des Flüssigkeitsstandes vorgesehen ist.

## Revendications

Séparateur pour filtrer des copeaux usinés à partir d'un agent réfrigérant qui comprend une cuve de réception (10) pour l'agent réfrigérant contenant les copeaux, une cuve (12) pour l'agent réfrigérant filtré qui est disposée contre la cuve de réception, un tamis (16) en forme de disque par lequel lesdites cuves communiquent l'une avec l'autre, un arbre rotatif (20) pour faire tourner ledit tamis (16) en forme de disque, des moyens d'entraînement (22) pour faire tourner ledit arbre rotatif et faire ainsi tourner ledit tamis (16) en forme de disque, et une buse (38) pour éjecter un fluide contre le tamis (16) en forme de disque, caractérisé en ce que la buse d'éjection (38) est immergée dans la cuve (12) à filtrat et en ce qu'une autre buse (44) pour projeter un fluide contre le tamis (16) en forme de disque est prévue à l'intérieur de la cuve de réception au-dessus du niveau du liquide.

FIG. 1

FIG.2

FIG. 3